# EUROPEAN PATENT SPECIFICATION

(11) **EP 1 605 393 B1**
(45) Date of publication and mention of the grant of the patent: **04.03.2009**
(21) Application number: 05105059.9
(22) Date of filing: 09.06.2005
(51) Int. Cl.: G06K 13/08

(54) **Card connector**
Kartenverbinder
Connecteur de cartes

(30) Priority: 09.06.2004 JP 2004171394
(43) Date of publication of application: 14.12.2005
(73) Proprietor: Tyco Electronics AMP K.K., Kawasaki-shi, Kanagawa 213-8535 (JP)
(72) Inventor: Tsuji, Junya, Kawasaki-shi, Kanagawa 213-8535 (JP)
(74) Representative: Johnstone, Douglas Ian

(56) References cited:
- EP-A- 1 378 858
- US-A1- 2002 127 899

## Description

The present invention relates to a card connector to which a card such as a memory card is connected.

In recent years, electronic devices requiring the insertion of a card for operation have become commonplace. A card, such as a memory card, that a user inserts as needed into an electronic device such as a camera, personal computer and portable telephone, and data is recorded on a card from this electronic device, or data is supplied from the card to the electronic device.

Such an electronic device is provided with a card connector to which a card such as a memory card is connected.

The card connector shown in Fig. 13 (see also JP2000-251025A), for example, has been known as a conventional card connector of this type.

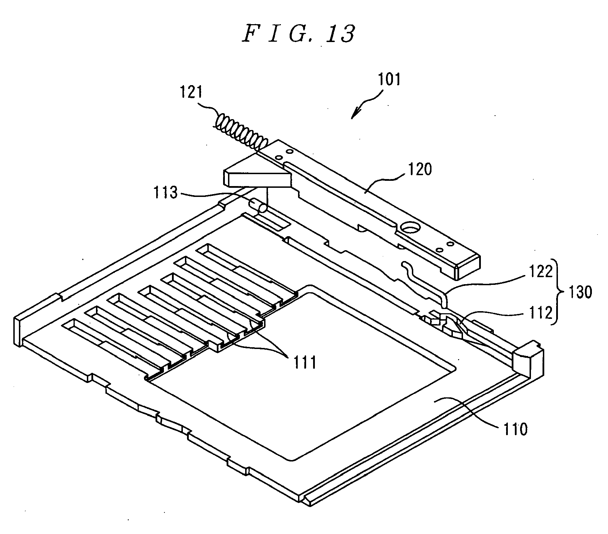

This card connector 101 comprises a housing 110 into which a card (not shown in the figure) is inserted and which has a plurality of contact supporting grooves 111, a slider 120 which is disposed on one side of the housing 110 and which ejects the card by being driven by a spring in the direction of card ejection (in the forward direction in Fig. 13), and a cam mechanism 130 which causes the slider 120 to stop in the connected position and in the open position along the direction of card ejection. Here, the slider 120 is designed to be driven in the direction of card ejection by a compression coil spring 121 whose rear-end portion is fitted over a spring receiving projection 113 that is provided on the rear wall (inside wall in Fig. 13) of the housing 110 and whose front-end portion abuts against the rear-end surface of the slider 120. Furthermore, the cam mechanism 130 is constructed from a heart-shaped cam groove 112 that is formed in the vicinity of the card insertion opening in the housing 110, and a cam rod 122 that is shaft-supported by the slider 120 and that swings along the cam groove 112.

Moreover, when the slider 120 is in the connected position, the card insertion is completed, so that the card is in contact with contacts (not shown in the figure) supported by the contact supporting grooves 111. When the card is pushed in the direction of insertion in this state, the slider is driven in the direction of card ejection by an action of the compression coil spring 121, and the slider 120 is caused to stop in the open position by the cam mechanism 130, so that the card is ejected.

Furthermore, the card connector shown in Figs. 14A and 14B (see JP2002-270299A), for example, has also been known as another example of a card connector to which a card is connected.

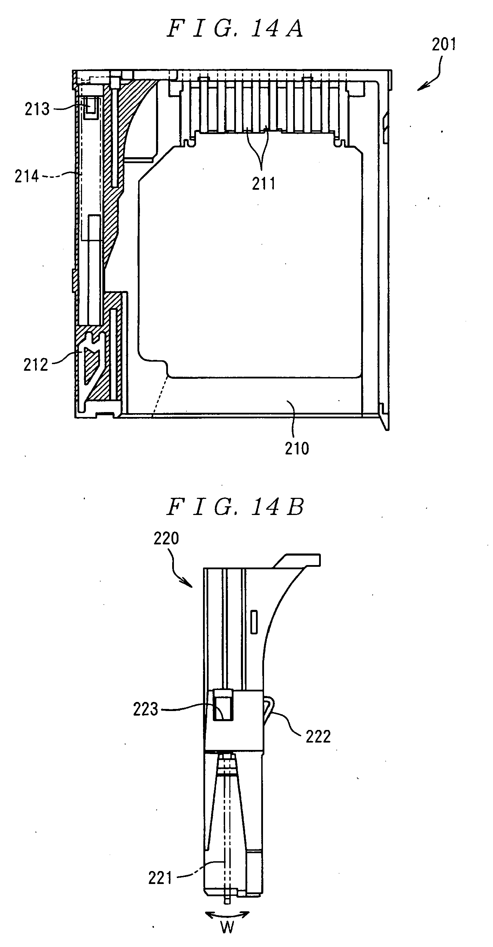

This card connector 201 comprises a housing 210 into which a card (not shown in the figure) is inserted and which has a plurality of contact supporting grooves 211, a slider 220 which is disposed on one side of the housing 210 and which ejects the card by being driven by a spring in the direction of card ejection (downward in Fig. 14A), a cam mechanism which causes the slider 220 to stop in the connected position and the open position along the direction of card ejection, and a locking member 222 which is attached to the slider 220 and which locks the card. Here, the slider 220 is designed to be driven in the direction of card ejection by means of a compression coil spring 214 whose rear-end portion is fitted over a spring receiving projection 213 that is provided on the rear wall (upper wall in Fig. 14A) of the housing 210 and whose front-end portion contacts the wall surface 223 of the slider 220. Furthermore, the cam mechanism is constructed from a heart-shaped cam groove 212 formed in the vicinity of the card insertion opening in the housing 210, and a cam rod 221 that is shaft-supported by the slider 220 and that swings along the cam groove 212.

In this card connector 201, when the slider 220 is in the connected position, the insertion of the card is completed, so that the card is locked by the locking member 222 in this card insertion completion state. Moreover, during the card ejection as well, the locking member 222 temporarily holds the card by means of the elastic force of this member, so that the card is prevented from jumping out.

However, the following problems have been encountered in these card connectors 101 and 201:

Specifically, in the case of the card connector 101 shown in Fig. 13, although the width and height of the card connector 101 can be reduced, since the cam groove 112 is formed in the vicinity of the card insertion opening in the housing 110, there is a problem in that it is difficult to reduce the dimension in the direction of depth of the card connector 101 (direction of card insertion and ejection).

In the case of the card connector 101, furthermore, there is no means for actively locking the card. Accordingly, the card cannot be locked in a state in which the card insertion has been completed. Moreover, there is also a problem in that the card cannot be prevented from jumping out at the time of the card ejection.

Meanwhile, in the case of the card connector 201 shown in Figs. 14A and 14B, since the locking member 222 for actively locking the card is present, the card can also be locked in a state in which the card insertion has been completed, and it is possible to prevent the card from jumping out at the time of card ejection.

However, in the card connector 201, although the width and height of the card connector 201 can be reduced, because the cam groove 212 is formed in the vicinity of the card insertion opening in the housing 210, there is a problem in that it is difficult to reduce the dimension in the direction of depth of the card connector 201.

In a compact electronic device that utilises card operation such as a portable telephone, in particular, there is a demand for reducing not only the width and height dimensions of the card connector, but also the dimension in the direction of depth.

Accordingly, the present invention was devised in light of the problems described above; it is an object of the present invention to provide a compact card connector in which the width and height of the connector can be reduced, and the dimension in the direction of depth of the connector can also be reduced.

According to the present invention there is provided a card connector comprising: a housing into which a card is inserted and to which a plurality of contacts are attached; a slider which is disposed on one side of the housing and which ejects the card by being driven in the direction of card ejection by a spring member; a cam mechanism which causes the slider to stop in a connected position and an open position along the direction of card ejection; and a locking member which locks the card, wherein the cam mechanism is composed of a heart-shaped cam groove that is formed in the slider, and a cam rod that is shaft-supported by the housing and that swings along the cam groove, the locking member has a cantilever shape and one end is fastened to the slider, a mobility range of a free other end of the locking member overlaps the cam groove above the cam groove.

Preferably, the card connector further comprises a shell that covers the upper surface of the housing, this shell has an engaging part that engages with a projection formed on the side of the free end of the locking member, and this engaging part restricts the swinging of the free end of the locking member by being engaged by the projection in the connected position of the slider, and permits the swinging of the free end of the locking member in the open position of the slider.

Preferably, the cam groove and the locking member are disposed in the lateral direction, and the spring member is disposed in the area between the end wall of the housing in the direction of card insertion, the cam groove in the slider, and the locking member.

The cam mechanism is composed of a heart-shaped cam groove that is formed in the slider, and a cam rod that is shaft-supported by the housing and that swings along the cam groove. Thus, since the heart-shaped cam groove is formed in the slider, the length of the housing in the direction of depth is not limited by the position of the cam groove, so that the depth dimension of the housing can be reduced. Furthermore, the locking member has a cantilever shape one end of which is fastened to the slider, and the mobility range of the free end at the other end overlaps above the cam groove; accordingly, the dimension of the slider in the direction of depth can also be reduced. Consequently, not only the dimensions of the connector in the width and height directions, but the depth dimension of the connector can also be reduced, so that it is possible to obtain a compact card connector.

The shell has an engaging part that engages with a projection formed on the side of the free end of the locking member, and this engaging part restricts the swinging of the free end of the locking member by being engaged by the projection in the connected position of the slider. Accordingly, it is possible to prevent interference between the locking member and cam groove in the connected position of the slider. Consequently, there is no interference of the locking member with the cam rod that swings along the cam groove in the connected position of the slider. Moreover, since the swinging of the free end of the locking member is restricted in the connected position of the slider, it is possible to prevent the card from being forcibly pulled out. In addition, since the engaging part permits the swinging of the free end of the locking member in the open position of the slider, the locking member acts as a temporary holding mechanism of the card in the open position of the slider, so that it is possible to prevent the sudden dropping of the card and to prevent damage to the card caused by such a sudden drop. If the card is intentionally pulled out with a strong force in the open position of the slider, the free end of the locking member swings, so that the card can be pulled out. When it is not intentional, however, the dropping of the card can be blocked by the elastic force of the locking member.

Preferably, the cam groove and the locking member are disposed in the lateral direction, and the spring member is disposed in the area between the end wall of the housing in the direction of card insertion, the cam groove in the slider, and the locking member. Accordingly, it is possible to reduce the depth dimension of the connector.

An embodiment of the present invention will now be described, by way of example only, with reference to the accompanying schematic drawings, in which:
Figs. 1A and 1B show a card in electrical contact with a card connector of the present invention, with Fig. 1A being a plan view, and Fig. 1B being a plan view in which the shell is removed;
Figs. 2A and 2B show the card in abutment with a rear wall of the housing of the card connector, with Fig. 2A being a plan view, and Fig. 2B being a plan view in which the shell is removed;
Figs. 3A and 3B show the card at an electrical noncontact position, with Fig. 3A being a plan view, and Fig. 3B being a plan view in which the shell is removed;
Figs. 4A to 4C show the card connector of Figs. 1A and 1B, with Fig. 4A being a plan view, Fig. 4B being a front view, and Fig. 4C being a back view;
Figs. 5A and 5B show the card connector of Figs. 1A and 1B, with Fig. 5A being a left-side view, and Fig. 5B being a right-side view;
Figs. 6A to 6C show the housing, with Fig. 6A being a plan view, Fig. 6B being a front view, and Fig. 6C being a back view;

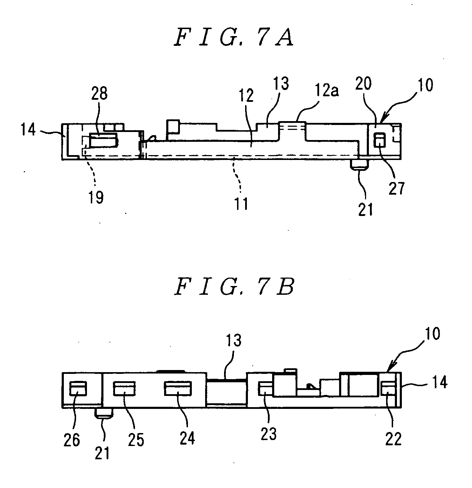

Figs. 7A and 7B show the housing, with Fig. 7A being a left-side view, and Fig. 7B being a right-side view;
Figs. 8A to 8F show the slider, with Fig. 8A being a plan view, Fig. 8B being a front view, Fig. 8C being a back view, Fig. 8D being a left-side view, Fig. 8E being a right-side view, and Fig. 8F being a bottom view;
Fig. 9 is a right-side view of the cam rod;

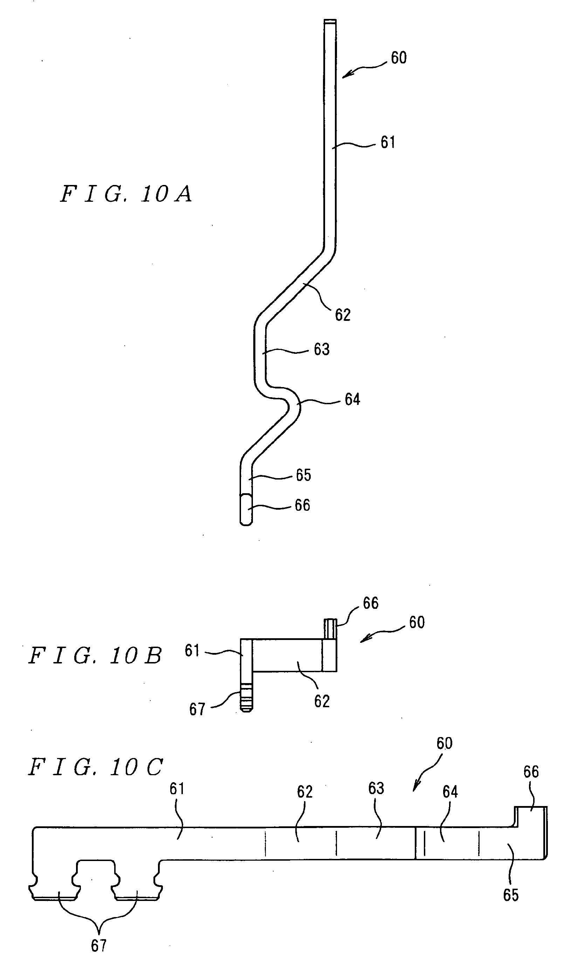

Figs. 10A to 10C show the locking member, with Fig. 10A being a plan view, Fig. 10B being a back view, and Fig. 10C being a left-side view;

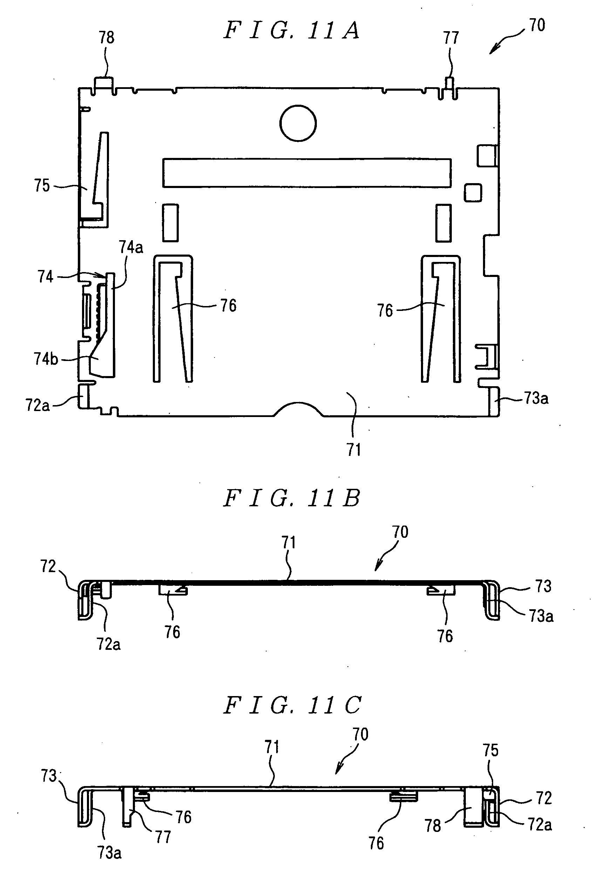

Figs. 11A to 11C show the shell, with Fig. 11A being a plan view, Fig. 11B being a front view, and Fig. 11C being a back view;

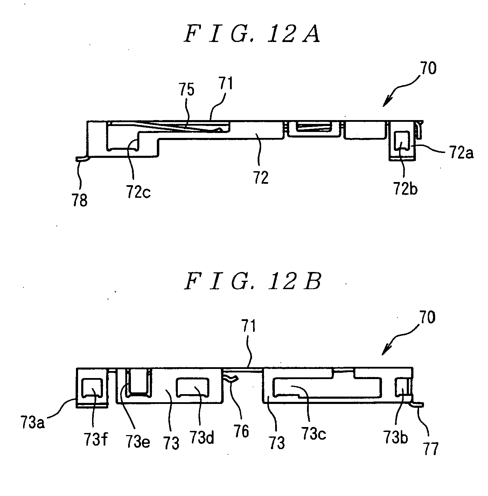

Figs. 12A and 12B show the shell of Figs. 11A through 11C, with Fig. 12A being a left-side view, and Fig. 12B being a right-side view;
Fig. 13 is an exploded perspective view of essential parts of a conventional example of a card connector; and
Figs. 14A and 14B show another conventional example of a card connector, with Fig. 14A being a plan view of the housing, and Fig. 14B being a plan view of the slider.

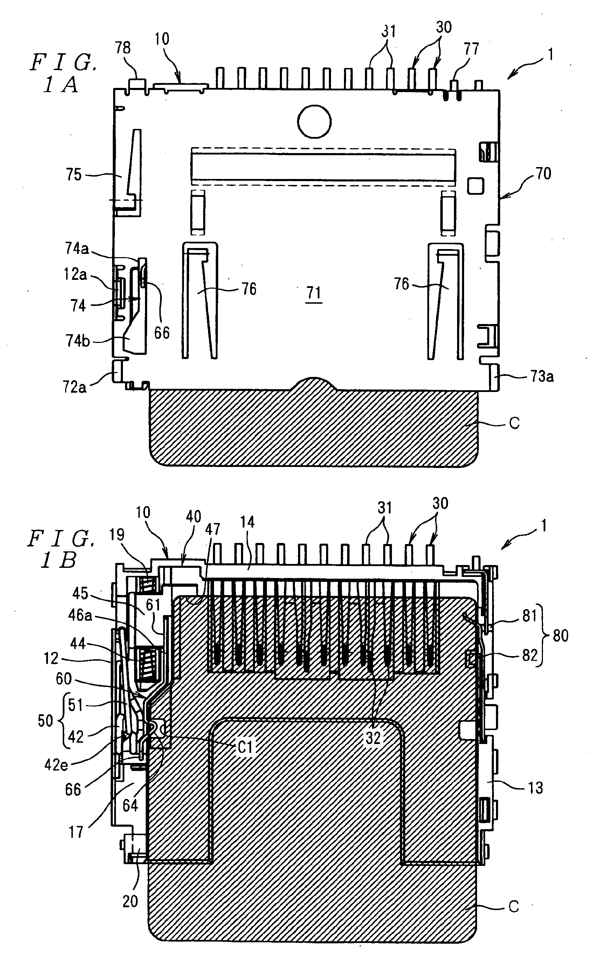

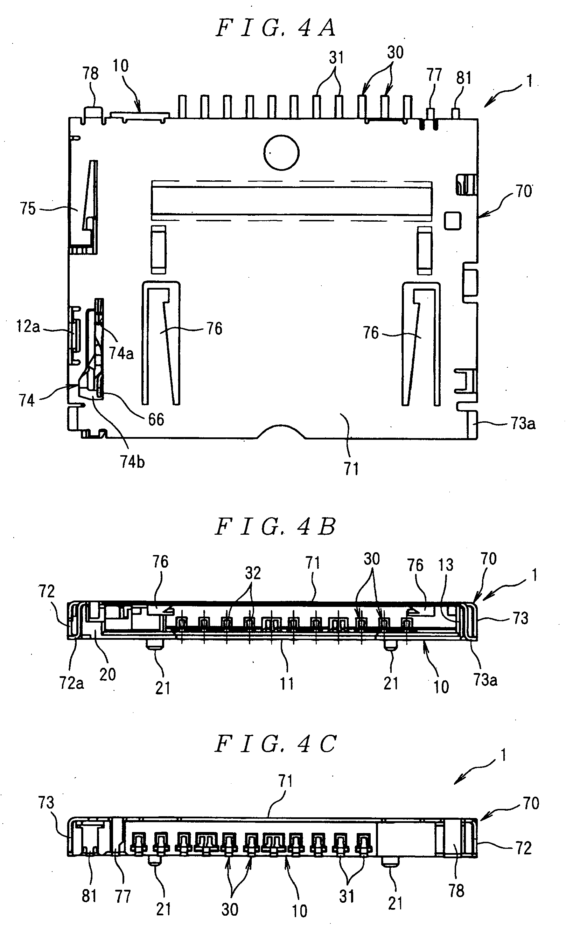

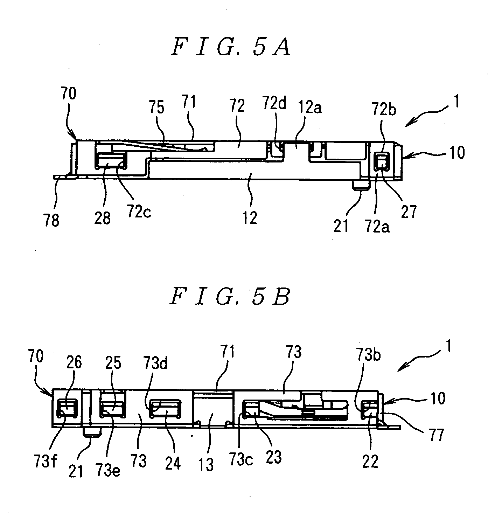

In Figs. 1A and 1B, 2A and 2B, 3A and 3B, 4A to 4C, and 5A and 5B, the card connector 1 comprises a housing 10 into which a card C is inserted, a slider 40 which ejects the card C, a cam mechanism 50, a locking member 60 which locks the card C, and a shell 70 made of metal which covers the upper surface of the housing 10.

Here, the housing 10 is devised so that the card C is inserted from the front (lower portion in Fig. 1A) toward the rear (upper portion in Fig. 1A), and so that the inserted card C is ejected from the rear toward the front.

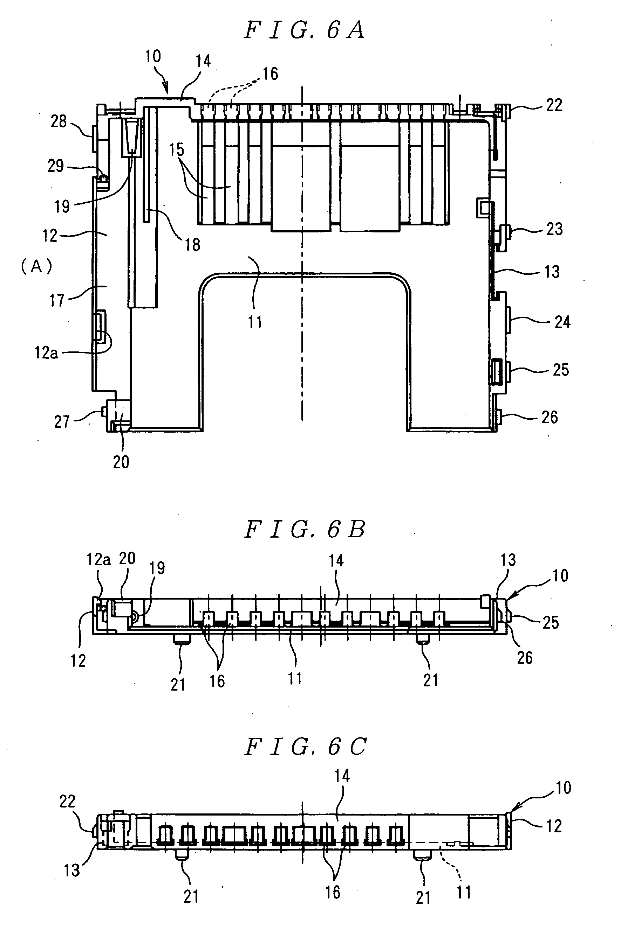

As shown in Figs. 6A to 6C, the housing 10 comprises a substantially rectangular bottom plate 11, side walls 12 and 13 that rise from both left and right sides (both left and right sides in Fig. 6A) of the bottom plate, and a rear wall 14 that rises from the rear edge of the bottom plate 11. The housing 10 is formed by molding an insulating resin. Furthermore, a plurality of press-fitted grooves 16 into which a plurality of contacts 30 (Figs. 1A and 1B) are press-fitted are formed in the rear wall 14 of the housing 10, and a plurality of flex permitting spaces 15 for allowing the downward flexing of elastic contact pieces 32 of the contacts 30 are formed in the bottom plate 11. The contacts 30 are press-fitted into the press-fitted grooves 16 in the housing 10, and each of the contacts 30 comprises a board connecting part 31 (Figs. 1A and 1B) that extends rearward from the rear wall 14 of the housing 10 and that is connected by soldering to the surface of a circuit board (not shown in the figures), and an elastic contact piece 32 that extends forward at an upward inclination when viewed from the rear wall 14 and that makes elastic contact with a conductive part (not shown in the figures) on the undersurface of the card C. Each contact 30 is formed by stamping and forming a metal plate.

A slider accommodating space 17 is formed on the inside of the left-side side wall 12 of the housing 10. Furthermore, a guide groove 18 that extends forward from the rear wall 14 is formed in the rear portion of the bottom plate 11 of the housing 10 in a position corresponding to the slider accommodating space 17. Moreover, a spring post 19 is formed to protrude forward from the rear wall 14 of the housing 10 slightly to the left of the guide groove 18. Furthermore, a stopper wall 20 is formed to protrude upward from the foremost end of the bottom plate 11 of the housing 10 in a position corresponding to the slider accommodating space 17. In addition, five locking claws 22, 23, 24, 25 and 26 are formed on the outer surface of the right-side side wall 13 so that these claws protrude from the rearmost end to the foremost end at specified intervals. Furthermore, a locking claw 27 is formed to protrude from the outer surface of the stopper wall 20, and a locking claw 28 is also formed to protrude from the rear-end portion of the outer surface of the left-side side wall 12. Moreover, a latch claw 12a is formed on the upper end of the left-side side wall 12 slightly toward the front in the forward-rearward direction. Furthermore, a cam rod shaft-supporting hole 29 is formed in the bottom wall 11 of the housing 10 toward the rear of the slider accommodating space 17 and immediately on the inside of the left-side side wall 12.

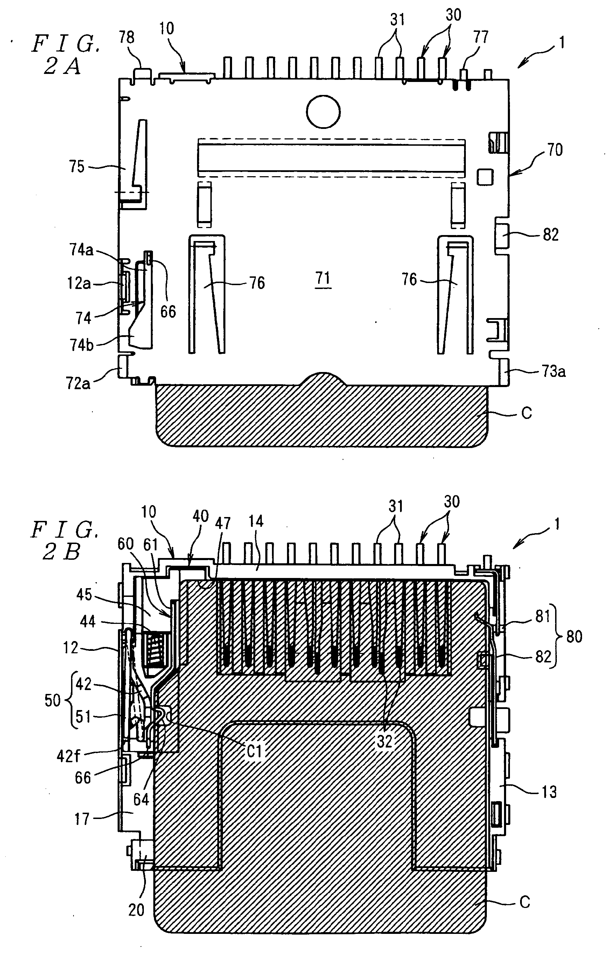

Furthermore, a card insertion detecting switch 80 (Figs. 1A and 1B, 2A and 2B, and 3A and 3B) that detects the state of the completion of the insertion of the card C is provided on the right-side side wall 13 of the housing 10. The card insertion detecting switch 80 is constructed from a first contact 81 one end of which is connected to the circuit board, and a second contact 82 one end of which is connected to the circuit board and the other end of which contacts the first contact 81 by being pushed by the side edge of the card C when the card insertion is completed. Incidentally, Figs. 1A and 1B, and 2A and 2B show the first and second contacts 81 and 82 that are in a state before these contacts are pushed by the card C. In addition, a plurality of positioning posts 21 for positioning the housing 10 with respect to the circuit board are formed on the undersurface of the housing 10.

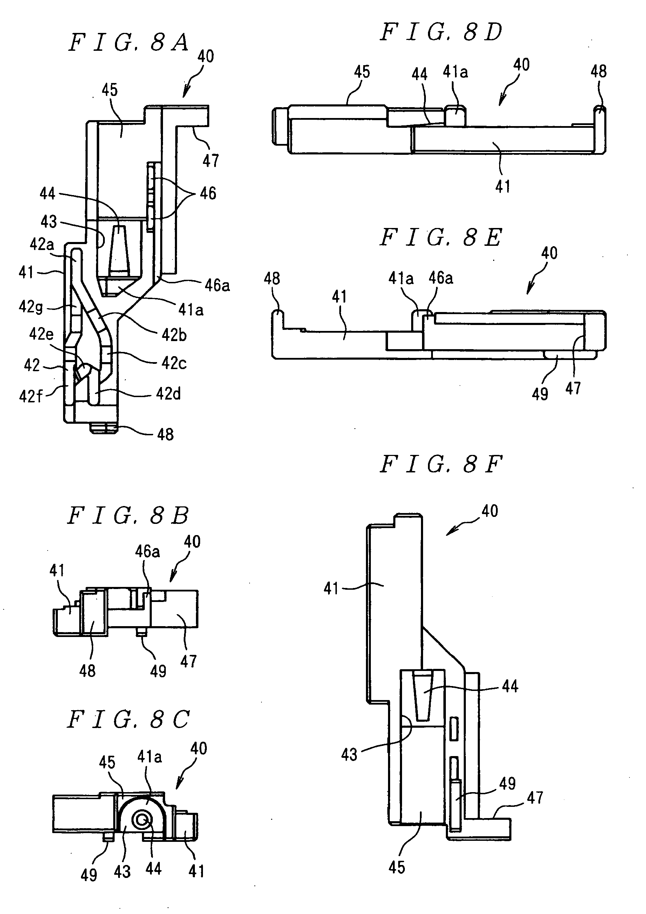

As shown in Figs. 8A to 8F, the slider 40 comprises a flat plate-form base part 41, and a heart-shaped cam groove 42 is formed in the upper surface of the base part 41. The slider 40 is formed by molding an insulating resin. The cam groove 42 comprises a first rectilinear part 42a that is formed in the rear portion of the base part 41 and that extends in the forward-rearward direction, a second rectilinear part 42b that is inclined from the front end of the first rectilinear part 42a diagonally toward the front right, and a third rectilinear part 42c that extends forward from the front end of the second rectilinear part 42b substantially parallel to the first rectilinear part 42a. Furthermore, the front end of the third rectilinear part 42c is bent slightly to the left, and a fourth rectilinear part 42d extends forward from this bent portion substantially parallel to the first rectilinear part 42a. Moreover, a fifth rectilinear part 42e extends forward at an inclination toward the left from the rear end of the fourth rectilinear part 42d, and a sixth rectilinear part 42f that extends in the forward-rearward direction substantially parallel to the first rectilinear part 42a is formed at the tip end of the fifth rectilinear part 42e. In addition, the rear end of the sixth rectilinear part 42f is bent slightly to the right, and a seventh rectilinear part 42g extends rearward from this bent portion substantially parallel to the first rectilinear part 42a. Furthermore, the rear end of the seventh rectilinear part 42g continues with the first rectilinear part 42a. Thus, the cam groove 42 is formed as a heart-shaped loop.

Moreover, a projecting part 41a rises from the area on the right side of the second rectilinear part 42b of the base part 41 of the slider 40, and a through-hole 43 that opens rearward and downward is formed in the rear of the projecting part 41a. A spring post 44 that extends rearward from the wall part of the base part 41 is formed to protrude into this through-hole 43. Furthermore, a spring cover part 45 is formed above the through-hole 43 on the rear of the spring post 44 so that this spring cover part 45 straddles the through-hole 43. Moreover, a plurality of locking member press-fitted grooves 46 are formed across the area extending in the forward-rearward direction in the upper surface of the base part 41 immediately to the right of the through-hole 43. In addition, a wall part 46a that extends in the forward-rearward direction rises from the upper surface of the base part 41 immediately to the right of the locking member press-fitted grooves 46. Furthermore, a protruding part that protrudes rightward is formed on the rear end of the right-side surface of the base part 41, and the front surface of this protruding part constitutes the pressing surface 47 of the card C. Moreover, a stopper 48 is formed to protrude upward from the front-end surface of the base part 41. Furthermore, as is shown in Fig. 8F, a guide projection 49 that extends in the forward-rearward direction and that is guided by the guide groove 18 of the housing 10 is formed on the undersurface of the slider 40 immediately to the left of the pressing surface 47 so that this guide projection 49 protrudes downward.

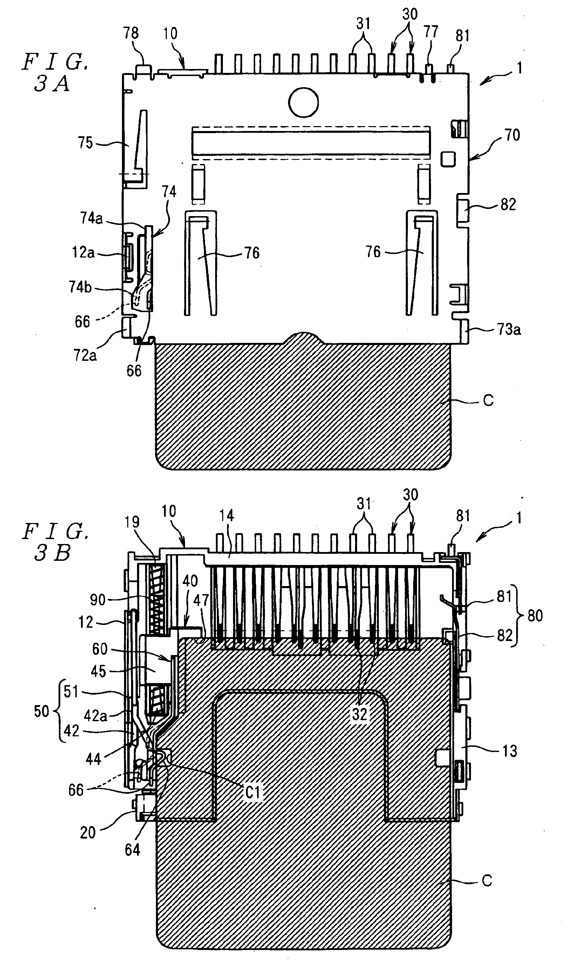

As shown in Figs. 1B, 2B and 3B, the slider 40 is accommodated in the slider accommodating space 17 in the housing 10 with the undersurface of the slider 40 facing downward, and the guide projection 49 is inserted into the guide groove 18 formed in the bottom wall 11 of the housing 10. As a result, the slider 40 is disposed in the housing 10 so that this slider 40 can move in the forward-rearward direction by the guide projection 49 being guided by the guide groove 18. Furthermore, as is shown in Fig. 3B, a compression coil spring (spring member) 90 is installed between the rear end of the slider 40 and the rear wall 14 of the housing 10, so that the slider 40 is constantly driven in the direction of card ejection (forward direction) by the compression coil spring 90. The compression coil spring 90 is supported by the rear end thereof being fitted over the spring post 19 provided on the housing 10, and the front end thereof being fitted over the spring post 44 provided on the slider 40. Specifically, the cam groove 42 and locking member 60 are disposed in the lateral direction, and the compression coil spring 90 is disposed in the area between the rear wall (end wall in the direction of card insertion) 14 of the housing 10, the cam groove 42 in the slider 40, and the locking member 60. The slider 40 can move along the direction of ejection of the card C between the connected position shown in Fig. 1B (i.e., the position when the insertion of the card C is completed), the rearmost-end position shown in Fig. 2B (i.e., the position when the card is placed in a state of insertion into the rearmost end), and the open position shown in Fig. 3B (i.e., the position when the card C is ejected).

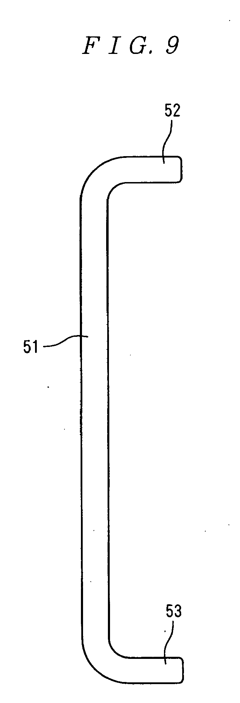

The cam mechanism 50 is used to cause the slider 40 to stop in the connected position and the open position, and is constructed from the heart-shaped cam groove 42 formed in the slider 40, and a cam rod 51 one end of which is shaft-supported by the cam rod shaft-supporting hole 29 in the housing 10 and the other end of which swings along the cam groove 42. As is shown in Fig. 9, the cam rod 51 is formed by bending both ends of a rectilinear metal rod in the same direction so that supporting shaft parts 52 and 53 are formed. One supporting shaft part 52 is shaft-supported by the cam rod shaft-supporting hole 29, while the other supporting shaft part 53 swings along the cam groove 42. The operation of the cam mechanism 50 will be described in details later.

The locking member 60 comprises a base plate part 61 that extends in the forward-rearward direction, a first rectilinear part 62 that extends forward at an inclination toward the left when viewed from the front end of the base plate part 61, a second rectilinear part 63 that extends forward from the front end of the first rectilinear part 62 substantially parallel to the base plate part 61, a bent part 64 that extends rightward from the front end of the second rectilinear part 63 and is bent to extend forward at an inclination toward the left, and a third rectilinear part 65 that extends forward from the front end of the bent part 64. The locking member 60 is formed by stamping and forming a metal plate. Furthermore, a plurality of press-fitting parts 67 that are press-fitted into the locking member press-fitted grooves 46 in the slider 40 are formed to protrude downward from the lower edge in the rear portion of the base plate part 61. Moreover, a projection 66 that protrudes upward is formed on the upper edge in the front-end portion of the third rectilinear part 65. The locking member 60 is constructed with a cantilever form in which the press-fitting parts 67 are fastened to the slider 40. Furthermore, as is shown in Figs. 1B, 2B and 3B, the bent part 64 of the locking member 60 is positioned inside a cutout C1 that is formed in the side portion of the card C, so that the card C is locked. Moreover, the projection 66 located on the opposite side from the press-fitting parts 67 is positioned slightly to the right of the cam groove 42 in the slider 40 when the bent part 64 is positioned inside the cutout C1; this projection 66 is positioned above the cam groove 42 in the slider 40 as indicated by the broken line in Fig. 3B when the bent part 64 contacts the side edge of the card C without being positioned inside the cutout C1. Specifically, the mobility range of the projection 66 overlaps above the cam groove 42. Furthermore, in a state in which the press-fitting parts 67 are fastened to the slider 40, the base plate part 61 of the locking member 60 contacts the left-side surface of the wall part 46a of the slider 40 as shown in Figs. 1B, 2B and 3B, so that rightward displacement is restricted by this wall part 46a.

The shell 70 comprises a substantially rectangular flat plate part 71 that covers the upper surface of the housing 10, and side walls 72 and 73 that extend downward from both the left and right sides of the flat plate part 71; the shell 70 is formed by stamping and forming a metal plate. A separate side wall 72a that extends downward from the flat plate part 71 is formed by bending this flat plate part on the front end of the left-side side wall 72 of the shell 70, and a locking hole 72b that is locked by the locking claw 27 formed on the stopper wall 20 of the housing 10 is formed in this side wall 72a. Furthermore, a locking hole 72c that is locked by the locking claw 28 formed on the left-side side wall 12 of the housing 10 is formed in the left-side side wall 72. Moreover, the right-side side wall 73 of the shell 70 is divided into front and rear by a cutout in the cener. Furthermore, locking holes 73b and 73c that are locked by the locking claws 22 and 23 formed on the side wall 13 of the housing 10 are formed in the right-side side wall 73 in the rear, and locking holes 73d and 73e that are locked by the locking claws 24 and 25 formed on the right-side side wall 13 of the housing 10 are formed in the right-side side wall 73 in the front. In addition, a separate side wall 73a that extends downward from the flat plate part 71 is formed further to the front of the right-side side wall 73 in the front, and a locking hole 73f that is locked by the locking claw 26 formed on the right-side side wall 13 of the housing 10 is formed in this side wall 73a.

Furthermore, a pair of tongue parts 76 that press the card C downward by the elastic contact with the surface of the inserted card C are cut and lowered toward the rear from both the left and right sides of the front portion of the flat plate part 71 of the shell 70. These tongue parts 76 have a function of preventing the card from jumping out at the time of the ejection of the card C. Moreover, a spring piece 75 that presses the cam rod 51 downward by elastically contacting the cam rod 51 is cut and lowered toward the front from the left-end side in the rear portion of the flat plate part 71. There is a danger that the cam rod 51 will jump out upward since one supporting shaft part 52 is simply shaft-supported by the cam rod shaft-supporting hole 29 in the housing 10, and since the other supporting shaft part 53 is simply positioned in the cam groove 42. However, this jumping out is prevented by the spring piece 75 pressing the cam rod 51 downward.

Moreover, an engaging part 74 which engages with the projection 66 that is formed on the side of the free end of the locking member 60 is formed on the flat plate part 71 of the shell 70. The engaging part 74 comprises a long narrow slit-form opening 74a that extends in the forward-rearward direction, and a wide opening 74b that extends forward from the front end of the slit-form opening 74a with the width thereof gradually increased to ultimately have a width that is approximately twice the width of the slit-form opening 74a or greater. In the connected position of the slider 40 shown in Fig. 1B and in the rearmost-end position shown in Fig. 2B, the engaging part 74 restricts the movement in the left-right direction (swinging) of the free end of the locking member 60 as a result of the projection 66 being engaged with the slit-form opening 74a. Moreover, when the slider 40 is in the open position shown in Fig. 3B, the engaging part 74 permits the swinging of the free end of the locking member 60 as a result of the projection 66 of the locking member 60 being positioned inside the wide opening 74b.

Next, the operation of the present invention will be described with reference to Figs. 1A and 1B, 2A and 2B, and 3A and 3B.

First, when the card C is not inserted in the housing 10, the slider 40 is driven in the direction of card ejection by the action of the compression coil spring 90. Accordingly, the slider 40 is in the open position as in the state shown in Fig. 3B. In this case, the supporting shaft part 53 of the cam rod 51 is positioned in the rear-end portion of the first rectilinear part 42a of the cam groove 42. Furthermore, the projection 66 of the locking member 60 is positioned slightly on the inside (on the right side) of the cam groove 42, and is also positioned inside the wide opening 74b in the shell 70, so that the swinging of the free end of the locking member 60 is permitted. The position of the projection 66 of the locking member 60 is located slightly on the inside of the cam groove 42, and the supporting shaft part 53 of the cam rod 51 is positioned in the rear-end portion of the first rectilinear part 42a of the cam groove 42. Since the cam rod 51 and locking member 60 are positionally separated, there is no interference.

In this state, the card C is inserted into the housing 10 from the front end of the housing 10. In this case, the inner wall surface of the right-side side wall 13 of the housing 10 and the inner wall surface of the stopper wall 20 constitute the guiding restricting surfaces for the two side edges of the card C. Furthermore, when the card C is inserted into the housing 10, the left-side edge of the card C causes the bent part 64 of the locking member 60 to be displaced outward, and when the cutout C1 in the card C is placed in the position of the bent part 64, the bent part 64 is displaced inward and positioned inside the cutout C1. Then, the projection 66 of the locking member 60 is positioned inside the wide opening 74b in the shell 70 and permits the swinging of the free end of the locking member 60. In this case, the tip end of the card C contacts the pressing surface 47 of the slider 40. When the bent part 64 is displaced outward, the projection 66 of the locking member 60 overlaps above the second rectilinear part 42b, third rectilinear part 42c, fourth rectilinear part 42d and fifth rectilinear part 42e of the cam groove 42 in the slider 40. However, the supporting shaft part 53 of the cam rod 51 is positioned in the rear-end portion of the first rectilinear part 42a of the cam groove 42, and the cam rod 51 and the locking member 60 are positionally separated, so that there is no interference. When the tip end of the card C contacts the pressing surface 47 of the slider 40 as well, the position of the projection 66 of the locking member 60 is located slightly on the inside of the cam groove 42, and the supporting shaft part 53 of the cam rod 51 is positioned in the rear-end portion of the first rectilinear part 42a of the cam groove 42. Since the cam rod 51 and the locking member 60 are positionally separated, there is no interference.

Furthermore, by pressing on the card C, the card C is inserted until the slider 40 contacts the rear wall 14 of the housing 10, and until the tip end of the card C contacts the rear wall 14 of the housing 10. Then, the supporting shaft part 53 of the cam rod 51 is positioned in the front-end portion of the fourth rectilinear part 42d of the cam groove 42 from the first rectilinear part 42a via the second rectilinear part 42b and third rectilinear part 42c. In this case, the projection 66 of the locking member 60 is positioned inside the slit-form opening 74a in the shell 70, and the projection 66 engages with the edge portion of the slit-form opening 74a, so that the swinging of the free end of the locking member 60 is restricted. Although the supporting shaft part 53 of the cam rod 51 is positioned in the front-end portion of the fourth rectilinear part 42d of the cam groove 42, the position of the projection 66 of the locking member 60 is located slightly on the inside of the cam groove 42, and the swinging of the free end is restricted by the projection 66 being engaged with the slit-form opening 74a. Accordingly, there is no interference between the cam rod 51 and the locking member 60.

When the card C is released in this state, the slider 40 is driven in the direction of card ejection (forward direction) by the action of the compression coil spring 90, so that the card C also moves in the direction of card ejection together with the slider 40. Then, the slider 42 assumes the connected position shown in Fig. 1B. At this point, the insertion of the card C is completed, and the elastic contact pieces 32 of the contacts 30 contact the conductive part formed on the undersurface of the card C, so that the circuit board and the card C are electrically connected. Furthermore, the first contact 81 and second contact 82 of the card insertion detecting switch 80 contact each other, so that an insertion detection signal is sent to the circuit board. In this process, the supporting shaft part 53 of the cam rod 51 moves from the fourth rectilinear part 42d to the fifth rectilinear part 42e of the cam groove 42, and stops at the rear end of the fifth rectilinear part 42e. Moreover, the projection 66 of the locking member 60 is still positioned inside the slit-form opening 74a in the shell 70, and the swinging of the free end of the locking member 60 is restricted by the engagement of the projection 66 with the edge portion of the slit-form opening 74a. The bent part 64 of the locking member 60 is positioned inside the cutout C1 in the card C. The supporting shaft part 53 of the cam rod 51 is positioned at the rear end of the fifth rectilinear part 42e of the cam groove 42. However, the position of the projection 66 of the locking member 60 is located slightly on the inside of the cam groove 42, and the projection 66 engages with the slit-form opening 74a, so that the swinging of the free end is restricted. Accordingly, there is no interference between the cam rod 51 and the locking member 60. Furthermore, since the swinging of the free end of the locking member 60 is restricted in the connected position of the slider 40, it is possible to prevent the card C from being pulled out forcibly.

Moreover, when the card is to be ejected, the card C is pushed again from this card insertion completion state, and the card C is pushed until the slider 40 contacts the rear wall 14 of the housing 10 and until the tip end of the card C contacts the rear wall 14 of the housing 10. Then, the slider 40 is placed in the rearmost-end position shown in Fig. 2B. In this process, the supporting shaft part 53 of the cam rod 51 is positioned from the fifth rectilinear part 42e of the cam groove 42 to the front-end portion of the sixth rectilinear part 42f. At this point, the projection 66 of the locking member 60 is still positioned inside the slit-form opening 74a in the shell 70, and the swinging of the free end of the locking member 60 is restricted by the engagement of the projection 66 with the edge portion of the slit-form opening 74a. The bent part 64 of the locking member 60 is positioned inside the cutout C1 in the card C. Although the supporting shaft part 53 of the cam rod 51 is positioned in the front-end portion of the sixth rectilinear part 42f of the cam groove 42, the position of the projection 66 of the locking member 60 is located slightly on the inside of the cam groove 42, and the swinging of the free end is restricted by the slit-form opening 74a. Accordingly, there is no interference between the cam rod 51 and the locking member 60.

Furthermore, when the card C is released in this state, the slider 40 is driven in the direction of card ejection (forward direction) by the action of the compression coil spring 90, and the card C also moves in the direction of card ejection together with the slider 40. Then, the slider 40 is placed in the open position shown in Fig 3B. In this case, the state of contact between the conductive part of the card C and the elastic contact pieces 32 of the contacts 30 is released, so that the card C is ejected from the housing 10. In this process, the supporting shaft part 53 of the cam rod 51 is positioned from the sixth rectilinear part 42f of the cam groove 42 to the rear-end portion of the first rectilinear part 42a via the seventh rectilinear part 42g. Moreover, the stopper 48 located at the foremost end of the slider 40 contacts the stopper wall 20 of the housing 10, so that the forward movement of the slider 40 is restricted. Furthermore, the projection 66 of the locking member 60 is positioned inside the wide opening 74b in the shell 70, so that the swinging of the free end of the locking member 60 is permitted; the bent part 64 is positioned inside the cutout C1 of the card C. In this case, the position of the projection 66 of the locking member 60 is located slightly on the inside of the cam groove 42, and the supporting shaft part 53 of the cam rod 51 is positioned in the rear-end portion of the first rectilinear part 42a of the cam groove 42. Since the cam rod 51 and the locking member 60 are positionally separated, there is no interference. In the open position of the slider 40, the swinging of the free end of the locking member 60 is permitted, and the bent part 64 is positioned inside the cutout C1 in the card C. Accordingly, in the open position of the slider 40, the locking member 60 acts as a temporary holding mechanism of the card C, so that it is possible to prevent the sudden dropping of the card C and to prevent damage to the card C as a result of such sudden dropping. When the card C is intentionally pulled out with a strong force in the open position of the slider 40, the card C can be pulled out by the flexing of the locking member 60. When it is not intentional, however, the dropping of the card is blocked by the elastic force of the locking member 60.

Furthermore, when the card C is intentionally pulled out forward from this state, the cutout C1 and the corner portion that is formed with the left-side edge of the card C cause the bent part 64 of the locking member 60 to be displaced outward, so that the bent part 64 is disengaged from the cutout C1 in the card C. The bent part 64 moves along the left-side edge of the card C, and the projection 66 overlaps above the second rectilinear part 42b, third rectilinear part 42c, fourth rectilinear part 42d and fifth rectilinear part 42e of the cam groove 42. In this case, the supporting shaft part 53 of the cam rod 51 is positioned in the rear-end portion of the first rectilinear part 42a of the cam groove 42, and the cam rod 51 and the locking member 60 are positionally separated, so that there is no interference. Moreover, when the card C is pulled out further forward, the card C is removed from the housing 10, so that the projection 66 of the locking member 60 returns to the original position.

In the embodiment described above, the cam mechanism 50 is constructed from the heart-shaped cam groove 42 that is formed in the slider 40, and the cam rod 51 that is shaft-supported by the housing 10 and that swings along the cam groove 42. Thus, since the heart-shaped cam groove 42 is formed in the slider 40, the length of the housing 10 in the direction of depth is not limited by the position of the cam groove 42, so that the depth dimension of the housing 10 can be reduced. Furthermore, the locking member 60 has a cantilever shape in which the press-fitting parts 67 at one end are fastened to the locking member press-fitted grooves 46 in the slider 40, and the mobility range of the free end at the other end overlaps above the cam groove 42, so that the dimension of the slider 40 in the direction of depth can also be reduced. Accordingly, not only the dimensions of the card connector 1 in the directions of width and height, but also the depth dimension of the card connector 1 can be reduced, making it possible to obtain a compact card connector 1.

Moreover, the cam groove 42 and locking member 60 are disposed in the lateral direction, and the compression coil spring 90 is disposed in the area between the rear wall (end wall in the direction of card insertion) 14 of the housing 10, the cam groove 42 in the slider 40, and the locking member 60. Accordingly, it is possible to further reduce the depth dimension of the card connector 1.

An embodiment of the present invention was described above. However, the present invention is not limited to this embodiment, and various alterations or modifications can be made.

For example, the engaging part 74 is constructed from the slit-form opening 74a and wide opening 74b. However, it would also be possible to use a groove that is formed in the shell 70 as long as the swinging of the free end of the locking member 60 is restricted by the engagement with the projection 66 in the connected position of the slider 40, and the swinging of the free end of the locking member 60 is permitted in the open position of the slider 40.

## Claims

1. A card connector (1) comprising:
a housing (10) into which a card (C) is inserted and to which a plurality of contacts (30) are attached;
a slider (40) which is disposed on one side of the housing (10) and which ejects the card (C) by being driven in the direction of card ejection by a spring member (90);
a cam mechanism (50) which causes the slider (40) to stop in a connected position and an open position along the direction of card ejection; and
a locking member (60) which locks the card (C), wherein
the cam mechanism (50) is composed of a heart-shaped cam groove (42) that is formed in the slider (40), and a cam rod (51) that is shaft-supported by the housing (10) and that swings along the cam groove (42), **characterized by** the fact that
the locking member (60) has a cantilever shape and one end is fastened to the slider (40), a mobility range of a free other end of the locking member (60) overlaps the cam groove (42) above the cam groove (42).

2. The card connector (1) according to Claim 1, wherein the card connector further comprises a shell (70) that covers the upper surface of the housing (10),
the shell (70) has an engaging part (74) that engages with a projection (66) formed on a side of the free end of the locking member (60), and
the engaging part (74) restricts the swinging of the free end of the locking member (60) by being engaged by the projection (66) in the connected position of the slider (40), and permits the swinging of the free end of the locking member (60) in the open position of the slider (40).

3. The card connector (1) according to Claim 1 or 2, wherein the cam groove (42) and the locking member (60) are disposed in the lateral direction, and the spring member (90) is disposed in an area between an end wall of the housing in the direction of card insertion, the cam groove (42) in the slider (40), and the locking member (60).

## Patentansprüche

1. Kartenverbinder (1), umfassend:
ein Gehäuse (10), in das eine Karte (C) eingesteckt wird und an dem eine Vielzahl von Kontakten (30) angebracht ist;
einen Schieber (40), der an einer Seite des Gehäuses (10) angeordnet ist, und der die Karte (C) auswirft, wenn er durch ein Federteil (90) in der Kartenauswurfrichtung bewegt wird;
einen Kurvenmechanismus (50), der bewirkt, dass der Schieber (40) in einer verbundenen Position und in einer offenen Position entlang der Richtung des Kartenausstoßes anhält; und
ein Verriegelungsteil (60), das die Karte (C) verriegelt, wobei
der Kurvenmechanismus (50) aus einer herzförmigen Kurvennut (42), die in dem Schieber (40) ausgebildet ist, und einer Kurvenstange (51) besteht, die durch das Gehäuse (10) schaftgestützt ist und die entlang der Kurvennut (42) schwingt,
**dadurch gekennzeichnet, dass**
das Verriegelungsteil (60) eine Auslegerform hat und ein Ende am Schieber (40) befestigt ist, ein Mobilitätsbereich eines freien anderen Endes des Verriegelungsteils (60) die Kurvennut (42) über der Kurvennut (42) überlappt.

2. Kartenverbinder (1) nach Anspruch 1, wobei der Kartenverbinder ferner eine Schale (70) aufweist, die die obere Fläche des Gehäuses (10) überdeckt,
die Schale (70) ein Eingriffsteil (74) hat, das mit einem Vorsprung (66), der auf einer Seite des freien Endes des Verriegelungsteils (60) ausgebildet ist, in Eingriff tritt und
das Eingriffsteil (74) das Schwingen des freien Endes des Verriegelungsteils (60) einschränkt, indem es in der verbundenen Position des Schiebers (40) mit dem Vorsprung (66) in Eingriff tritt und in der offenen Position des Schiebers (40) das Schwingen des freien Endes des Verriegelungsteils (60) zulässt.

3. Kartenverbinder (1) nach Anspruch 1 oder 2, wobei die Kurvennut (42) und das Verriegelungsteil (60) in der Querrichtung angeordnet sind und das Federteil (90) in einem Bereich zwischen einer Endwand des Gehäuses in der Richtung der Karteneinführung, der Kurvennut (42) im Schieber (40) und dem Verriegelungsteil (60) angeordnet ist.

## Revendications

1. Connecteur de carte (1) comportant:
un boîtier (10) dans lequel une carte (C) est introduite et auquel une pluralité de contacts (30) est connectée ;
une glissière (40) qui est agencée sur un côté du boîtier (10) et qui éjecte la carte (C) en étant entrainée dans la direction d'éjection de carte par un élément de ressort (90) ;
un mécanisme à came (50) qui force la glissière (40) à s'arrêter dans une position connectée et dans une position ouverte le long de la direction d'éjection de carte ; et
un élément de blocage (60) qui verrouille la carte (C), dans lequel
le mécanisme à came (50) est composé d'un chemin de came en forme de cour (42) qui est formé dans la glissière (40), et d'une tige à came (51) qui est portée par arbre par le boîtier (10) et qui oscille le long du chemin de came (42), **caractérisé en ce que**,
l'élément de blocage (60) présente une forme de levier et une extrémité est fixée à la glissière (40), une plage de mobilité d'une autre extrémité libre de l'élément de blocage (60) chevauche le chemin de came (42) au-dessus du chemin de came (42).

2. Connecteur de carte(1) selon la revendication 1, dans lequel le connecteur de carte comporte en outre une enveloppe (70) qui recouvre la surface supérieure du boîtier (10),
l'enveloppe (70) présente une partie de retenue (74) qui vient en prise avec une saillie (66) formée sur un côté de l'extrémité libre de l'élément de blocage (60), et
la partie de retenue (74) limite l'oscillation de l'extrémité libre de l'élément de blocage (60) en étant mise en prise par la saillie (66) dans la position connectée de la glissière (40), et autorise l'oscillation de l'extrémité libre de l'élément de blocage (60) dans la position ouverte de la glissière (40).

3. Connecteur de carte(1) selon la revendication 1 ou 2, dans lequel le chemin de came (42) et l'élément de blocage (60) sont agencés dans la direction latérale, et l'élément de ressort (90) est agencé dans une zone entre une paroi d'extrémité du boîtier dans la direction d'introduction de carte, le chemin de came (42) dans la glissière (40), et l'élément de blocage (60).
